# EUROPÄISCHE PATENTSCHRIFT

(11) **EP 1 652 340 B1**
(45) Veröffentlichungstag und Bekanntmachung des Hinweises auf die Patenterteilung: **09.01.2008**
(21) Anmeldenummer: 04741308.3
(22) Anmeldetag: 28.07.2004
(51) Int. Cl.: H04L 12/26, H04L 12/24

(54) **NACHRICHTENANALYSEEINRICHTUNG UND VERFAHREN ZUM ANALYSIEREN**
MESSAGE ANALYSIS DEVICE AND METHOD FOR ANALYSIS
DISPOSITIF D'ANALYSE DE MESSAGES ET PROCEDE D'ANALYSE

(30) Priorität: 05.08.2003 DE 10335811
(43) Veröffentlichungstag der Anmeldung: 03.05.2006
(73) Patentinhaber: Rohde & Schwarz GmbH & Co. KG, 81671 München (DE)
(72) Erfinder: MICHL, Andreas, 81673 München (DE)
(74) Vertreter: Körfer, Thomas
(86) Internationale Anmeldenummer: PCT/EP2004/008461
(87) Internationale Veröffentlichungsnummer: WO 2005/018153

(56) Entgegenhaltungen:
- US-A1- 2002 105 911
- US-A1- 2002 156 884
- US-A1- 2002 198 985
- US-B1- 6 526 044

## Beschreibung

Die Erfindung betrifft eine Nachrichtenanalyseeinrichtung und ein Verfahren zum Analysieren von über Dienstzugangspunkte von Schichten eines OSI-Referenzmodells übertragenen Nachrichten.

Eine Nachrichtenanalyseeinrichtung und ein Verfahren zum Analysieren von Nachrichten, die bei einem nach dem OSI-Referenzmodell aufgebauten Kommunikationssystem zwischen den einzelnen Schichten des OSI-Referenzmodells übertragen werden, sind in der nicht vorveröffentlichten DE 102 04 657 A1 beschrieben. Diese Nachrichtenanalyseeinrichtung weist dabei Mittel auf, mit denen aus einer chronologisch aufgelisteten Reihenfolge aller Nachrichten, unabhängig von der jeweils betroffenen Schicht des OSI-Referenzmodells, der Kausalzusammenhang zwischen einzelnen Nachrichten darstellbar ist. Hierzu wird in einer Speichervorrichtung bei einem Testdurchlauf zu jeder Nachricht, die übertragen wird, eine ergänzende Information gespeichert, aus der mit der Analyseeinrichtung ermittelt werden kann, welche Nachrichten als Folge einer anderen Nachricht erzeugt wurden. Umgekehrt ist ebenfalls möglich, zu einer bestimmten Nachricht zu bestimmen, welche Nachrichten ursächlich für das Übertragen der bestimmten nachfolgenden Nachricht ist.

Die Auswahl der Nachricht, zu der vorangegangene bzw. nachfolgende Nachrichten ermittelt werden, die mit der Nachricht in kausalem Zusammenhang stehen, erfolgt durch Selektieren der Nachricht in einem ersten Bereich einer Darstellungseinrichtung. In diesem ersten Bereich der Darstellungseinrichtung ist lediglich eine begrenzte Anzahl von Nachrichten darstellbar, wobei die jeweils in dem ersten Bereich der Darstellungseinrichtung angezeigten Nachrichten nach dem Einlesen der Informationen aus einer Speichervorrichtung in Tabellenform angezeigt werden. Die Anordnung der Informationen, die in dem ersten Bereich dargestellt werden, erfolgt dabei auf Basis einer Zeitinformation, die zu jeder einzelnen Nachricht abgespeichert wird.

Nachteilig dabei ist, dass die in dem ersten Bereich dargestellte Anzahl von Nachrichten jeweils nur einen kleinen Ausschnitt aus der gesamten Anzahl von Nachrichten bildet, die in der Speichervorrichtung bei einem Testdurchlauf abgespeichert werden. Insbesondere wird auf Grund der Sortierung der Nachrichten auf Basis der Zeitinformation eine Vielzahl von Nachrichten in dem ersten Bereich angezeigt, welche bei einer Analyse eines Testszenarios außer Betracht bleiben können, da sie mit den übrigen Nachrichten weder in einem unmittelbaren kausalem Zusammenhang stehen, noch dieselbe Schicht des OSI-Referenzmodells betreffen.

Die Publikation US2002/0105911 offenbart eine Vorrichtung zur Überwachung und Analyse von über eine Kommunikationsverbindung übertragenen Datenpaketen mit getrennter Darstellung der Analyseresultate in zwei Bildschirmbereichen.
Die Publikation US 6526044 offenbart eine Vorrichtung zur Protokollanalyse und Netzwerküberwachung mit graphischer Darstellung der statistisch aufbereiteten Resultate.

Der Erfindung liegt die Aufgabe zugrunde, eine Nachrichtanalyseeinrichtung und ein Verfahren zum Analysieren von Nachrichten zu schaffen, bei dem eine Auswertung eines charakteristischen Merkmals für eine Vielzahl von über einen Dienstzugangspunkt übertragenen Nachrichten möglich ist, ohne dass sämtliche Informationen zu allen verfügbaren Nachrichten durch die Nachrichtenanalyseeinrichtung eingelesen werden müssen.

Die Aufgabe wird durch die erfindungsgemäße Nachrichtanalyseeinrichtung nach Anspruch 1 sowie das erfindungsgemäße Verfahren nach Anspruch 10 gelöst.

Bei der erfindungsgemäßen Nachrichtanalyseeinrichtung werden die in einer Speichervorrichtung der Nachrichtanalyseeinrichtung gespeicherten Nachrichten mittels einer Auswahlvorrichtung eingelesen. Detaillierte Informationen zu den einzelnen Nachrichten werden in einem ersten Bereich der Darstellungseinrichtung durch Auflisten der Nachrichten in chronologischer Reihenfolge angezeigt. Vorteilhaft ist es, dass durch die Auswahlvorrichtung für eine bestimmte Gruppe von Nachrichten, nämlich alle diejenigen Nachrichten, die über einen bestimmten Dienstzugangspunkt übertragen wurden, ein charakteristisches Merkmal ermittelt wird. Dieses charakteristische Merkmal ist dann als Verlauf über eine große Anzahl von Nachrichten in einem zweiten Bereich der Darstellungseinrichtung darstellbar und ermöglicht einen schnellen Überblick über eine weite Spanne von Nachrichten. Vorzugsweise wird der Verlauf des charakteristischen Merkmals für die gesamte Anzahl von in der Speichervorrichtung bei einem Testdurchlauf abgelegten Nachrichten ermittelt.

Damit ist eine Auswertung hinsichtlich eines charakteristischen Merkmals für eine große Gruppe von Nachrichten auf Grund des dargestellten Verlaufs in dem zweiten Bereich möglich, wobei die durch die Auswahlvorrichtung eingelesene Datenmenge stark reduziert ist. Der Datentransfer beschränkt sich auf das Einlesen der dem charakteristischen Merkmals zugrundeliegenden Information nur derjenigen Nachrichten, die über einen oder mehrere bestimmte Dienstzugangspunkte übertragen wurden und reduziert somit die Ladezeiten.

In den Unteransprüchen sind vorteilhafte Weiterbildungen des erfindungsgemäßen Verfahrens sowie der erfindungsgemäßen Nachrichtanalyseeinrichtung aufgeführt.

Insbesondere ist es vorteilhaft, wenn bei der Auswertung des Verlaufs eines charakteristischen Merkmals der über einen bestimmten Dienstzugangspunkt übertragenen Nachrichten zusätzliche Informationen zu einer zu einem bestimmten Zeitpunkt übertragenen Gruppe von Nachrichten erforderlich sind, dass zur Anzeige von detaillierten Informationen in dem ersten Bereich durch die Auswahlvorrichtung eine bestimmte Abfolge von Nachrichten mit sämtlichen Informationen aus der Speichervorrichtung eingelesen wird. Dabei wird durch eine Auswahl eines bestimmten Punkts in dem zweiten Bereich für die Auswahlvorrichtung eine Nachricht festgelegt, die einen Bezugspunkt für die einzulesende Abfolge von Nachrichten zur Darstellung in dem ersten Bereich bildet.

Ein weiterer Vorteil ist es, dass in dem zweiten Bereich eine Vorauswahl von bestimmten Punkten getroffen werden kann, indem in dem zweiten Bereich mit einer Markierung ein bestimmter Punkt markierbar ist, wobei die mit diesem bestimmten Punkt korrespondierende Abfolge von Nachrichten erst bei einer Auswahl der Markierung in dem zweiten Bereich durch die Auswahlvorrichtung eingelesen wird. Insbesondere wenn mehrere solcher Markierungen in dem zweiten Bereich verschiedene bestimmte Punkte markieren, ist ein wiederholter Wechsel zwischen den einzelnen, in dem ersten Bereich darzustellenden Abfolgen einfach möglich. Werden durch die Markierungen z. B. signifikante Änderungen in dem Testablauf markiert, so können jeweils die sich in der Folge in den Nachrichten ergebenden Änderungen einfach miteinander verglichen werden. Die Verwendung der entsprechenden Markierungen erlaubt dabei in dem ersten Bereich exakt dieselben Nachrichten wiederholt anzuzeigen.

Während eines Testablaufs können auch zusätzliche Informationen über den Testablauf in der Speichervorrichtung abgespeichert werden, wenn z. B. in dem Testablauf ein bestimmtes Ereignis eintritt. Dies kann z. B. eine Änderung einer Dämpfung sein. Bei der Darstellung eines Verlaufs eines charakteristischen Merkmals werden dann an den entsprechenden Stellen des Diagramms automatisch Markierungen gesetzt. Kritische Stellen in der abgespeicherten chronologischen Folge von Nachrichten sind auf Grund der in dem zweiten Bereich dargestellten automatisch gesetzten Markierungen leicht auffindbar und es können die jeweiligen detaillierten Informationen bei Auswahl der automatisch gesetzten Markierungen durch die Auswahlvorrichtung aus der Speichervorrichtung eingelesen werden. Durch das gezielte Auffinden von einer bestimmten Abfolge von Nachrichten für die die Detailinformationen durch die Auswahlvorrichtung eingelesen werden, wird aus der großen Menge an Daten, die in der Speichervorrichtung zu der Gesamtheit von Nachrichten abgelegt ist, jeweils nur ein kleiner Ausschnitt eingelesen. Die erforderliche zu ladende Datenmenge wird damit erheblich reduziert, wodurch eine Verbesserung des Benutzerkomforts der Nachrichtenanalyseeinrichtung erreicht wird.

Ein Ausführungsbeispiel des erfindungsgemäßen Verfahrens und der erfindungsgemäßen Nachrichtenanalyseeinrichtung sind in der Zeichnung dargestellt und werden in der nachfolgenden Beschreibung näher erläutert. Es zeigen:
- Fig. 1: eine beispielhafte Darstellung eines OSI-Referenzmodells in einem Testszenario,
- Fig. 2: eine schematische Darstellung eines Ausführungsbeispiels einer erfindungsgemäßen Nachrichtenanalyseeinrichtung,
- Fig. 3: ein erstes Beispiel für eine Anzeige einer Darstellungseinrichtung der erfindungsgemäßen Nachrichtenanalyseeinrichtung,
- Fig. 4: ein zweites Beispiel für eine Anzeige einer Darstellungseinrichtung der erfindungsgemäßen Nachrichtenanalyseeinrichtung, und
- Fig. 5: ein drittes Beispiel für eine Anzeige einer Darstellungseinrichtung der erfindungsgemäßen Nachrichtenanalyseeinrichtung.

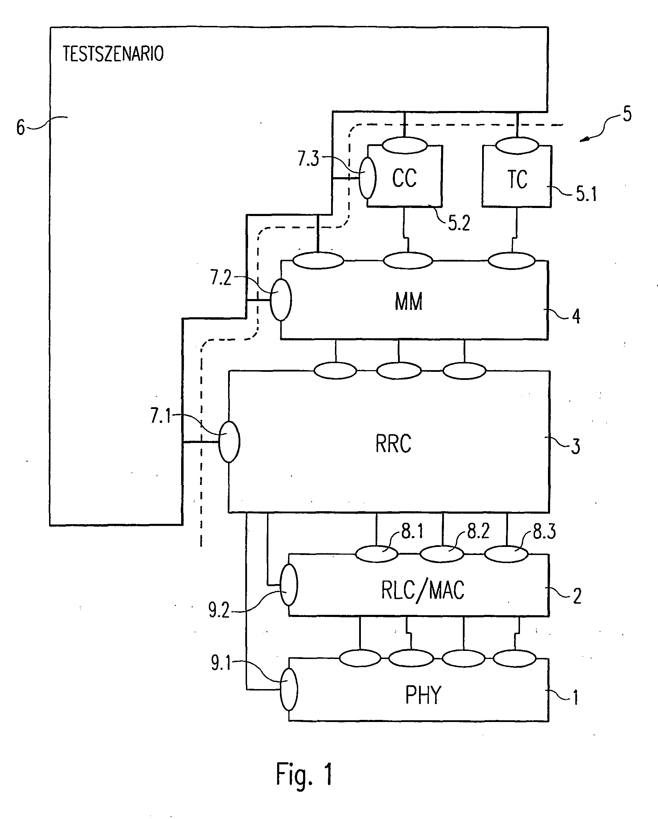

Zum besseren Verständnis der Erfindung soll einführend anhand der schematischen Darstellung der Fig. 1 kurz ein Beispiel für ein OSI-Referenzmodell mit einem Testszenario erläutert werden, wie es beispielsweise beim Testen von neuen Softwarekomponenten für Mobilfunksysteme verwendet wird. Das OSI-Referenzmodell ist in der Fig. 1 vereinfacht dargestellt und umfasst fünf Schichten, die z. B. ein Endsystem eines Teilnehmers eines Mobilfunksystems repräsentieren. Die erste Schicht ist eine Bitübertragungsschicht 1 ("physical layer"; PHY) die die tatsächliche Übertragung von physikalischen Informationen wiederspiegelt, also die bitweise Übertragung z. B. von Nutzdaten.

Oberhalb der Bitübertragungsschicht 1 ist eine zweite Schicht 2 angeordnet ("radio link control"; RLC/"media access control"; MAC), die von einer dritten Schicht 3 ("radio resource control"; RRC), einer vierten Schicht 4 ("mobility management"; MM) und einer fünften Schicht 5 ("test control" 5.1; TC/ "call control" 5.2; CC) gefolgt wird, die die Anwendungsschicht und damit die Schnittstelle zur Nutzung durch den Mobilfunkteilnehmer bzw. im dargestellten Ausführungsbeispiel durch das Testgerät bildet.

Zum Steuern eines Testablaufs wird auf das beschriebene OSI-Referenzmodell ein Testszenario 6 angewandt, welches mit verschiedenen Schichten des OSI-Referenzmodells über deren jeweilige Dienstzugangspunkte kommuniziert. Neben den Dienstzugangspunkten, die in einer horizontalen Ebene, also zwischen den Schichten, angeordnet sind, kommuniziert das Testszenario 6 mit bestimmten Schichten über Kontroll-Dienstzugangspunkte, die in der Fig. 1 als vertikal orientierte Ovale dargestellt sind und mit den Bezugszeichen 7.1, 7.2 und 7.3 bezeichnet sind. Über diese Kontroll-Dienstzugangspunkte 7.1 bis 7.3 können von dem Testszenario 6, welches ein vorbestimmter Ablauf ist, der durch einen Protokolltester vorgegeben wird, für die betreffende dritte, vierte oder fünfte Schicht 3, 4 oder 5 Parameter des jeweiligen Protokolls der Schicht vorgegeben und damit während eines Testablaufs gezielt verändert werden.

Die einzelnen Schichten des OSI-Referenzmodells kommunizieren durch das Übertragen von Nachrichten miteinander, wobei die Nachrichten jeweils über Dienstzugangspunkte von einer Schicht zu einer anderen übertragen werden. Auch beim Übertragen von Nachrichten ist zu unterscheiden zwischen denjenigen Dienstzugangspunkten, die in der Fig. 1 als horizontal angeordnete Ovale dargestellt sind, wie dies beispielsweise die Dienstzugangspunkte der zweiten Schicht 8.1, 8.2 und 8.3 sind. Die zusätzlich vorhandenen vertikal dargestellten Dienstzugangspunkte, z. B. der Dienstzugangspunkt 9.1 der Bitübertragungsschicht 1 und der Dienstzugangspunkt 9.2 der zweiten Schicht 2 dienen wiederum der Übergabe von Parametern, die in diesem Fall jedoch nicht von dem externen Testszenario 6 stammen, sondern von einer anderen Schicht des OSI-Referenzmodells.

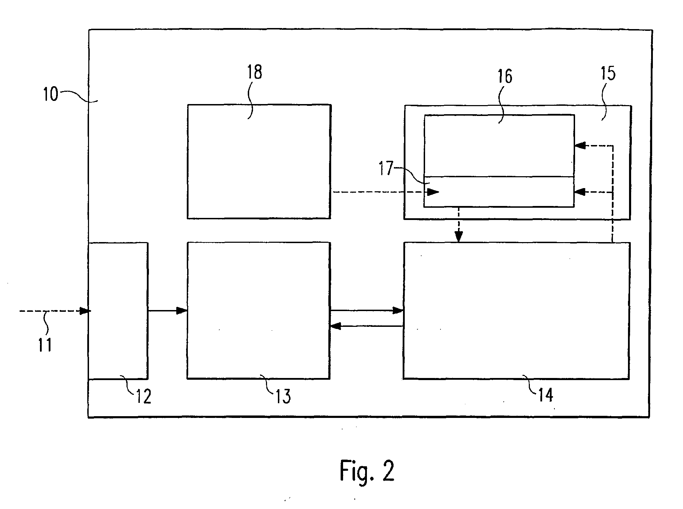

Während eines Testdurchlaufs werden die Nachrichten, die über die Dienstzugangspunkte der Schichten des OSI-Referenzmodells übertragen werden, in einer Datei in einer Speichervorrichtung der Nachrichtanalyseeinrichtung abgelegt. Die Nachrichten werden in dieser sogenannten "Log-Datei" mit einer Vielzahl von Informationen, wie z. B. dem Ursprung der Nachricht, dem jeweiligen Dienstzugangspunkt, über den die Nachricht übertragen wurde, die Übertragungszeit usw. abgespeichert. Hierzu ist eine Verbindung 11 vorgesehen, wie sie bei der Nachrichtanalyseeinrichtung 10, die in Fig. 2 schematisch dargestellt ist, gezeigt ist.

Über die Verbindung 11 werden die Nachrichten in chronologischer Reihenfolge über eine Schnittstelle 12 in der Speichervorrichtung 13 als Datei abgelegt. Auf die in der Speichervorrichtung 13 abgespeicherten Nachrichten wird durch eine Auswahlvorrichtung 14 zugegriffen. Durch die Auswahlvorrichtung 14 kann dabei beispielsweise ein Teil der Nachrichten mit sämtlichen Informationen, die bezüglich der Nachricht in der Speichervorrichtung 13 vorhanden sind, eingelesen werden, oder aber zu einem bestimmten Kriterium können alle diejenigen Nachrichten ausgewählt werden, die dieses Kriterium erfüllen. Für diese Nachrichten wird dann durch die Auswahlvorrichtung 14 beispielsweise ein bestimmtes, charakteristisches Merkmal ermittelt, wobei hierfür gezielt durch die Auswahlvorrichtung 14 auf den entsprechenden Speicherbereich der Speichervorrichtung 13 zugegriffen wird, ohne dass sämtliche Merkmale der Nachrichten durch die Auswahlvorrichtung 14 aus der Speichervorrichtung 13 eingelesen werden müssen.

Durch die Auswahlvorrichtung 14 wird damit selektiv aus der Speichervorrichtung 13 lediglich ein Teil der dort zu den einzelnen Nachrichten abgespeicherten Informationen herausgegriffen. Die Menge der einzulesenden Informationen wird damit reduziert. Dementsprechend werden die Ladezeiten für die auszuwertenden Daten reduziert. Die Auswahlvorrichtung 14 ist mit einer Darstellungseinrichtung 15 verbunden, wobei die Darstellungseinrichtung 15 z. B. innerhalb eines darauf dargestellten Fensters einen ersten Bereich 16 und einen zweiten Bereich 17 aufweist.

Wird z. B. eine Abfolge von Nachrichten mit ihrem gesamten Informationsgehalt durch die Auswahlvorrichtung 14 eingelesen, so können diese gesamten Informationen in dem ersten Bereich 16 der Auswahlvorrichtung 14 dargestellt werden, wozu beispielsweise eine begrenzte Anzahl von Nachrichten, also eine Abfolge von Nachrichten chronologisch in Tabellenform in dem ersten Bereich 16 der Darstellungseinrichtung 15 dargestellt werden. Neben der Realzeit, zu der jede Nachricht übertragen wurde, sind in der Tabelle weitere die Nachricht inhaltlich näher beschreibende Informationen darstellbar.

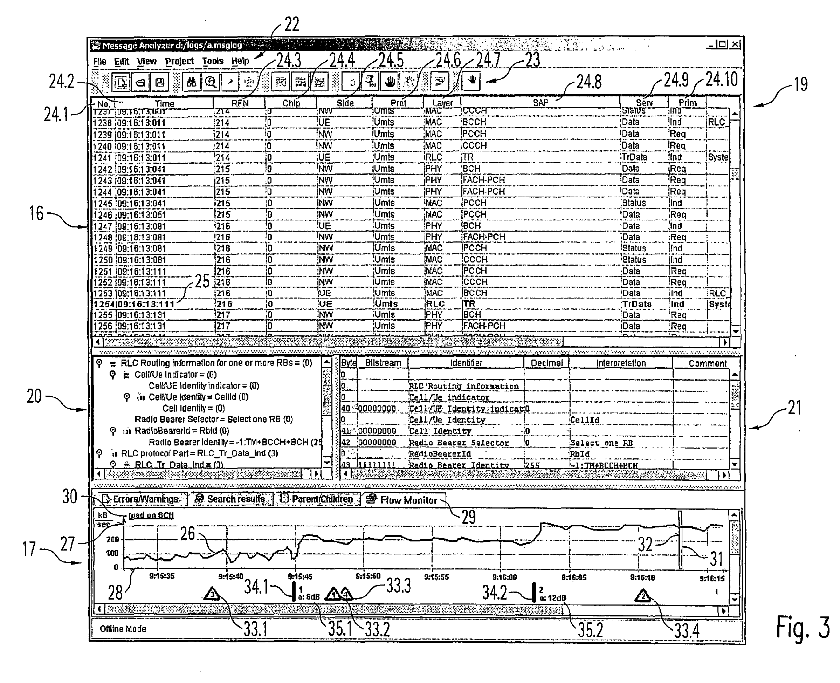

In dem zweiten Bereich 17 wird dagegen für eine große Anzahl von Nachrichten, die nach einem durch den Benutzer festlegbaren Kriterium ausgewählt werden, lediglich ein kleiner Teil der Informationen dargestellt. Beispiele für eine solche Darstellung werden nachfolgend noch unter Bezugnahme auf die Fig. 3 bis 5 ausführlich erläutert.

Während in dem ersten Bereich 16 Nachrichten, die über beliebige Dienstzugangspunkte übertragen wurden, in chronologischer Reihenfolge dargestellt werden, werden zur Darstellung eines Verlaufs von einem charakteristischen Merkmal einer Gruppe von Nachrichten jeweils nur über bestimmte Dienstzugangspunkte, insbesondere über einen bestimmten Dienstzugangspunkt übertragene Nachrichten ausgewertet und aus jeweils einem Kriterium jeder dieser Nachrichten durch die Auswahlvorrichtung 14 ein charakteristisches Merkmal ermittelt.

Nachdem z. B. von einem Benutzer ein bestimmter Dienstzugangspunkt und ein charakteristisches Merkmal festgelegt wurde, wird von der Auswahlvorrichtung 14 aus der Speichervorrichtung 13 jeweils diejenige Information der Nachrichten eingelesen, die mit dem charakteristischen Merkmal in Zusammenhang steht. Das Einlesen dieser Informationen der Nachrichten erfolgt in diesem Beispiel selektiv nur für diejenigen Nachrichten, welche über den von dem Benutzer festgelegten Dienstzugangspunkt übertragen wurden. Als einfaches Beispiel kann von der Auswahlvorrichtung 14 ermittelt werden, wie viele Nachrichten über einen bestimmten Dienstzugangspunkt pro Zeiteinheit übertragen wurden. In diesem Beispiele ist die Anzahl der Nachrichten pro Zeiteinheit das charakteristische Merkmal, wobei durch einen Benutzer zudem ein bestimmter oder mehrere bestimmte Dienstzugangspunkte auszuwählen sind. Durch die Auswahlvorrichtung 14 wird dann aus der Gesamtheit der in der Speichervorrichtung 13 abgelegten Nachrichten aller Dienstzugangspunkte diejenige Gruppe von Nachrichten herausgegriffen, welche über den bzw. die von dem Benutzer festgelegten Dienstzugangspunkte übertragen wurden. Für diese Dienstzugangspunkte wird anhand der jeweiligen Realzeit ermittelt, wie viele Nachrichten pro Zeiteinheit übertragen wurden.

In dem zweiten Bereich 17 der Darstellungseinrichtung 15 wird dann das charakteristische Merkmal, im angegebenen Ausführungsbeispiel also eine Anzahl von Nachrichten pro Zeiteinheit, über einer Basisskala aufgetragen. In dem zweiten Bereich 17 ist damit eine grafische Darstellung zu einem charakteristischen Merkmal für bestimmte Nachrichten gegeben, die es erlaubt, eine schnelle Auswahl aus einem großen Zeitraum, der während des Testdurchlaufs überstrichen wird, zu treffen. Hierzu ist in dem Verlauf, der in dem zweiten Bereich 17 der Darstellungseinrichtung 15 dargestellt wird, mit einem Auswahlmittel 18 eine Auswahl zu treffen, indem beispielsweise mit einer Computermaus als Auswahlmittel 18 ein bestimmter Punkt des dargestellten Verlaufs angeklickt wird.

Nach einer solchen Auswahl eines bestimmten Punkts des Verlaufs, der in dem zweiten Bereich 17 dargestellt ist, wird eine mit diesen bestimmten Punkt korrespondierende Abfolge von Nachrichten durch die Auswahlvorrichtung 14 aus der Speichervorrichtung 13 eingelesen, wobei zu dieser Abfolge von Nachrichten vorzugsweise sämtliche verfügbaren Informationen aus der Speichervorrichtung 13 eingelesen werden. Diese Informationen zum Inhalt, die durch die Auswahl eines bestimmten Punkts in dem Verlauf in dem zweiten Bereich 17 nur für eine begrenzte Abfolge von Nachrichten eingelesen werden, werden dann in dem ersten Bereich 16 der Darstellungseinrichtung 15 wiederum in Tabellenform dargestellt.

Eine erste Ansicht einer solchen Darstellung auf einer Darstellungseinrichtung 15 ist in Fig. 3 gezeigt. Die Darstellung zeigt ein Programmfenster 19, in dessen oberen Teil bei horizontaler Teilung des Programmfensters 19 der erste Bereich 16 und in dessen unteren Teil der zweite Bereich 17 angeordnet ist. Zwischen dem ersten Bereich 16 und dem zweiten Bereich 17 ist in dem Programmfenster 19 ein dritter Bereich 20 und ein vierter Bereich 21 ausgebildet. Der dritte Bereich 20 und der vierte Bereich 21 dienen zur Darstellung beispielsweise der Struktur einer Nachricht, die in dem ersten Bereich markiert ist oder von zusätzlichen detaillierten Informationen zu den in der Tabelle des ersten Bereichs 16 dargestellten übergeordneten inhaltlichen Informationen einer einzelnen Nachricht.

Das Programmfenster 19 zeigt zusätzlich zu den vier Bereichen 16, 17, 20 und 21 eine Menüleiste 22 sowie eine Reihe von Schaltflächen 23, wie sie von Computerprogrammen für andere Anwendungen bekannt sind. Wie bereits angedeutet wurde, ist in dem ersten Bereich 16 eine Abfolge von Nachrichten in tabellarischer Form dargestellt, wobei die einzelnen Spalten 24.1 bis 24.10 Informationen zu den Nachrichten der Abfolge enthalten. Jeder Eintrag für eine Nachricht umfasst eine Zeile in der dargestellten Tabelle.

In der ersten Spalte 24.1 wird eine laufende Nummer der Nachricht angezeigt. Die zweite Spalte 24.2 enthält eine Realzeit, zu der die Nachricht übertragen wurde, wohingegen in der dritten und vierten Spalte 24.3 und 24.4 eine jeweils der Nachricht zuzuordnende Systemzeit angezeigt wird. Die fünfte Spalte 24.5 enthält Angaben darüber, ob die jeweilige Nachricht von einem Endsystem auf der Seite der Basisstation oder des Mobilfunkteilnehmers erzeugt wurde.

In der sechsten Spalte 24.6 ist angegeben, welches Protokoll der Nachricht zugrundeliegt. Im dargestellten Ausführungsbeispiel ist das verwendete Mobilfunkprotokoll UMTS. Eine siebte Spalte 24.7 gibt an, von welcher der Schichten nach dem OSI-Referenzmodell die betreffenden Nachrichten verschickt wurde. Eine achte Spalte 24.8 gibt entsprechend an, über welchen Dienstzugangspunkt die Nachricht übertragen wurde. In Fig. 3 ist außerdem zu erkennen, dass über eine Vielzahl von Dienstzugangspunkten Nachrichten übertragen werden, welche zeitlich so dicht aufeinander folgen, dass in der tabellarischer Darstellung des ersten Bereichs 16 eine Abfolge von Nachrichten dargestellt ist, welche über verschiedene Dienstzugangspunkte übertragen wurden.

Die Auswahl, welche Informationen zu den einzelnen Nachrichten in dem ersten Bereich 16 dargestellt werden sollen, kann durch einen Benutzer in einem Auswahlmenü getroffen werden, so dass beispielsweise die erläuterten Spalten 24.1 bis 24.8 sowie die beiden weiteren Spalten 24.9 und 24.10, welche die versandte Nachrichtenart betreffen, eingestellt werden können. Mit Hilfe des Auswahlmittels 18 kann der Benutzer in der tabellarischen Darstellung in dem ersten Bereich 16 eine einzelne Nachricht markieren, welche dann als fettgedruckt oder farbig hervorgehobene Nachricht 25 dargestellt wird.

Zusätzlich zu dem bereits in der Tabelle des ersten Bereichs 16 angezeigten Informationsgehalt der Nachricht wird dann in dem dritten Bereich 20 zu der hervorgehobenen Nachricht 25 die Struktur dieser einzelnen, hervorgehobenen Nachricht 25 dargestellt. Die hierarchische Struktur wird in dem dritten Bereich 20 durch Einrückungen wiedergegeben. In dem vierten Bereich 21 werden detaillierte Informationen zu dem Wert der hervorgehobenen Nachricht 25 des ersten Bereichs 16 dargestellt, wobei hier die bitweise Darstellung der einzelnen Strukturelemente der Nachricht im Vordergrund steht.

Im Gegensatz zu der einzelnen Angabe von Detailinformationen zu einer einzelnen Nachricht, die in den drei Bereichen 16, 20 und 21 dargestellt sind, wird in dem zweiten Bereich 17 ein Verlauf 26 eines charakteristischen Merkmal für eine Vielzahl von Nachrichten, die miteinander in Zusammenhang stehen, dargestellt. In dem dargestellten Ausführungsbeispiel wird beispielsweise auf der y-Achse 27 eine Datenlast dargestellt, also die Menge der pro Zeiteinheit über einen bestimmten Dienstzugangspunkt übertragenen Daten. Die gewählte Einheit beträgt im dargestellten Ausführungsbeispiel Kilobyte pro Sekunde und betrifft einen mit BCH ("Broadcast Channel") bezeichneten Dienstzugangspunkt, wie es in einer Legende 30 in dem zweiten Bereich 17 angezeigt wird.

Der Eintrag in der Legende 30 und der Verlauf 26, der in dem zweiten Bereich 17 dargestellt ist, können z. B. farblich übereinstimmen, so dass in dem zweiten Bereich 17 auch mehrere Verläufe darstellbar sind, wobei dennoch eine eindeutige Zuordnung möglich ist. Voraussetzung zum Darstellen von mehreren Verläufen in dem zweiten Bereich 17 ist es, dass als charakteristisches Merkmal, welches auf einer y-Achse 27 aufgetragen wird, dieselbe Größe verwendet wird und das außerdem die Bezugsgröße der Basisskala auf einer x-Achse 28 identisch ist. Für den in der Fig. 3 dargestellten Verlauf 26 ist als Basisskala für die x-Achse 28 die Realzeit zugrundegelegt.

Der zweite Bereich 17 innerhalb des Programmfensters 19 ist neben der Verwendung zur Darstellung des Verlaufs 26 auch zur Darstellung von anderen Informationen vorgesehen. Hierzu sind in dem zweiten Bereich 17 Registerkarten vorgesehen, die über entsprechende Reiter 29 in den Vordergrund gebracht werden können.

Die Abfolge von Nachrichten, die in dem ersten Bereich 16 aufgelistet ist, betrifft die Nachrichten innerhalb eines bestimmten Zeitraums für die Realzeit, die in der zweiten Spalte 24.2 angegeben ist. Für den in der sichtbaren Tabelle dargestellten Zeitbereich ist ein zugeordneter Rahmen 31 in dem zweiten Bereich 17 dargestellt, mit dem eine einfache zeitliche Zuordnung zwischen den in dem ersten Bereich 16 aufgelisteten Nachrichten und dem zeitlichen Gesamtverlauf des charakteristischen Mermals, das in dem zweiten Bereich 17 dargestellt wird, möglich ist.

Um in dem ersten Bereich 16 gegenüber der dargestellten Abfolge von Nachrichten eine andere Abfolge von Nachrichten mit zeitlich anderer Lage darzustellen, wird mit der Auswahlvorrichtung 14 aus der Speichervorrichtung 13 eine andere Abfolge von Nachrichten mit den zugehörigen Informationen eingelesen. Hierzu wird zunächst mit Hilfe des Auswahlmittels 18 in dem zweiten Bereich 17 eine Stelle des Verlaufs 26 ausgewählt. Dadurch wird eine Auswahl eines bestimmten Punkts 32 durchgeführt. Der bestimmte Punkt 32 betrifft dabei nur die Lage auf der jeweils verwendeten Basisskala, im dargestellten Ausführungsbeispiel also einen bestimmten Zeitpunkt auf der als Zeitachse der Realzeit dienenden x-Achse 28.

Neben der unmittelbaren Bestimmung eines bestimmten Punkts 32 durch Anklicken einer Stelle in dem dargestellten Verlauf 26 in dem zweiten Bereich 17 ist es auch möglich, eine oder mehrere Markierungen 33.1 bis 33.4 zu setzen, welche jeweils einen bestimmten Punkt festlegen, ohne diesen jedoch schon auszuwählen. Die Auswahl desjenigen bestimmten Punkts, der einer einzelnen Markierung 33.1, 33.2, 33.3 oder 33.4 zuzuordnen ist, erfolgt jeweils erst, wenn die betreffende Markierung z. B. wiederum durch das Auswahlmittel 18 ausgewählt wird. Durch das Auswählen einer der entsprechenden Markierungen 33.1 bis 33.4 wird mittelbar der der jeweils ausgewählten Markierung 33.1 bis 33.4 zugeordnete bestimmte Punkt ausgewählt und infolgedessen in dem ersten Bereich 16 die mit diesem bestimmten Punkt korrespondierende Abfolge von Nachrichten angezeigt. Mit jeder Auswahl eines bestimmten Punkts, sei es direkt oder indirekt mittels einer Markierung, wird eine entsprechende Abfolge von Nachrichten durch die Auswahlvorrichtung 14 aus der Speichervorrichtung 13 eingelesen.

Alternativ kann die in dem ersten Bereich 16 dargestellte Abfolge von Nachrichten auch durch Betätigen einer Bildlaufleiste verschoben werden, wobei der in dem zweiten Bereich 17 dargestellte Rahmen 31 entsprechend verschoben dargestellt wird.

Bei dem Erstellen der grafischen Ausgabe für den Verlauf 26 in dem zweiten Bereich 17 können aufgrund von zusätzlichen Informationen, die in der Speichervorrichtung 13 beispielsweise bestimmte Zeitpunkte der Realzeit definieren, auch automatisch weitere Markierungen 34.1 und 34.2 gesetzt werden. Mit Hilfe dieser weiteren Markierungen 34.1 und 34.2 ist es möglich, bestimmte Abfolgen von Nachrichten vereinfacht aufzufinden, die bei der Auswertung von besonderem Interesse sind. Beispielsweise kann durch das Testszenario 6 jeweils eine zusätzliche Information in der Speichervorrichtung 13 zu denjenigen Zeitpunkten abgelegt werden, zu denen bei der Durchführung des Tests eine Dämpfung verändert wird, wie dies für die beiden automatisch gesetzten Markierungen 34.1 und 34.2 in der Fig. 3 dargestellt ist. Ebenso wie die Markierungen 33.1 bis 33.4 können die automatisch gesetzten Markierungen 34.1 und 34.2 durch das Auswahlmittel 18 ausgewählt werden und damit eine Abfolge von Nachrichten durch die Auswahlvorrichtung 14 eingelesen und in dem ersten Bereich 16 angezeigt werden, für die ein verändertes Verhalten auf Grund des Sprungs bei der Dämpfung erwartet wird.

In dem zweiten Bereich 17 wird vorzugsweise zu den, weiteren Markierungen 34.1 und 34.2 eine kurze Angabe 35.1 bzw. 35.2 dargestellt, die die Ursache für den Eintrag der zusätzlichen Information in der Speichervorrichtung 13 angibt. Zudem ist es vorteilhaft, die Markierungen 33.1 bis 33.4, die durch einen Benutzer manuell gesetzt werden, und die weiteren Markierungen 34.1 und 34.2 optisch unterscheidbar darzustellen.

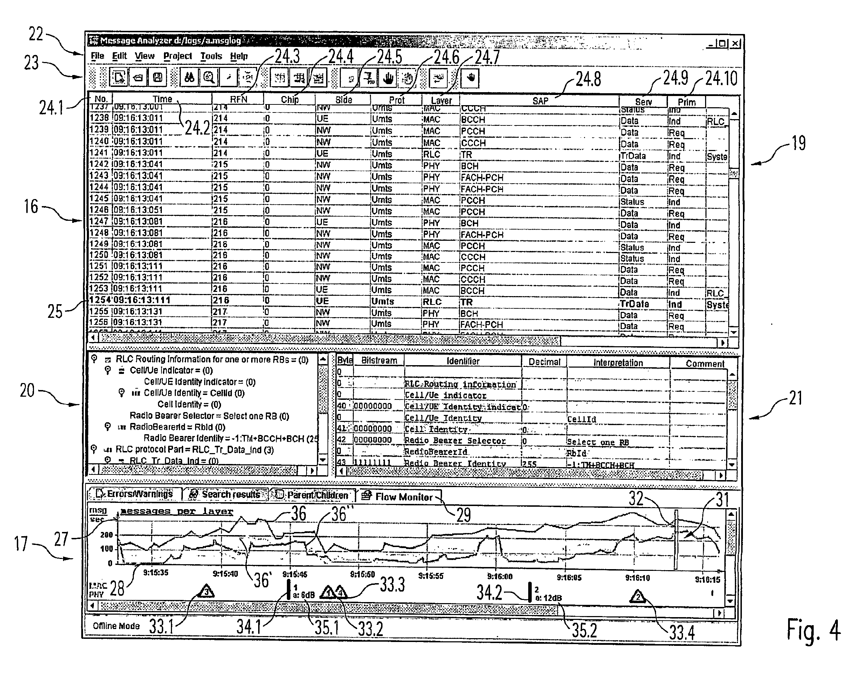

In Fig. 4 ist eine weitere mögliche Darstellung eines Programmfensters 19 gezeigt, bei dem in dem zweiten Bereich 17 insgesamt drei Verläufe 36, 36' und 36" dargestellt sind. Die x-Achse 28 ist wieder die Zeitachse für die Realzeit. Auf der y-Achse 27 sind im Gegensatz zu dem vorherigen Ausführungsbeispiel der Fig. 3 anstelle der Datenlast die Anzahl der Nachrichten für mehrere Schichten des OSI-Referenzmodells pro Zeiteinheit aufgetragen. Von der Auswahlvorrichtung 14 werden dabei die Informationen von den Nachrichten sämtlicher Dienstzugangspunkte einer Schicht des OSI-Referenzmodells verarbeitet, um ein gemeinsames charakteristisches Merkmal der gesamten Schicht zu ermitteln.

Als Folge wird die Anzahl der über sämtliche Dienstzugangspunkte einer bestimmten Schicht des OSI-Referenzmodells übertragenen Nachrichten zusammengefasst und als entsprechender Verlauf 36, 36' oder 36'' dargestellt. Da in dem ersten Bereich 16 die einzelnen Nachrichten lediglich auf Grund der Realzeit tabellarisch angeordnet werden, sind in dem ersten Bereich 16 des Ausführungsbeispiels der Fig. 4 dieselben Nachrichten zu erkennen wie in dem Ausführungsbeispiel der Fig. 3, da in der veränderten Darstellung des zweiten Bereichs 17 der Fig. 4 noch kein von dem bestimmten Punkt 32 in Fig. 3 abweichender bestimmter Punkt ausgewählt wurde. Die Position des Rahmens 31, mit dem die in dem ersten Bereich 16 dargestellte Abfolge von Nachrichten als Zeitspanne in dem zweiten Bereich 17 wiedergegeben ist, entspricht daher dem Rahmen 31, wie er in Fig. 3 in dem zweiten Bereich 17 gezeigt ist.

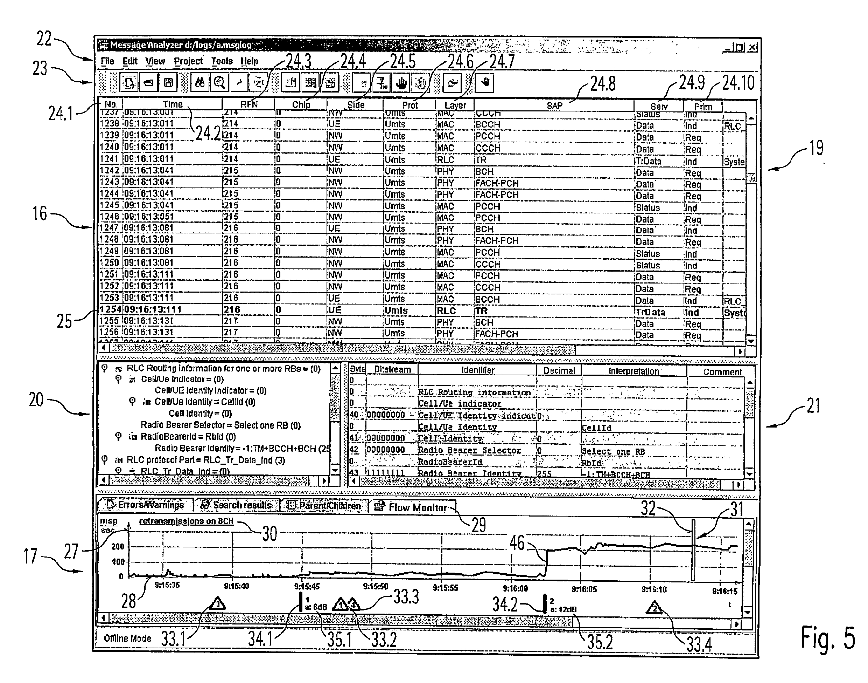

Zwischen den jeweiligen Darstellungen in dem zweiten Bereich 17, wie er in Fig. 3 bzw. Fig. 4 gezeigt ist, kann z. B. ein Bediener über ein Auswahlmenü auswählen, ohne dass die in den übrigen Bereichen 16, 20 und 21 dargestellten Informationen verändert werden, solange die Auswahl des bestimmten Punkts 32 in dem zweiten Bereich 17 nicht verändert wird und damit eine neue Abfolge von Nachrichten aus der Speichervorrichtung 13 durch die Auswahlvorrichtung 14 eingelesen wird. In dem dritten Ausführungsbeispiel in Fig. 5 ist als Verlauf 46 wiederum über der Realzeit als x-Achse 28 anstelle der Datenlast von Fig. 3 als charakteristisches Merkmal die Anzahl der wiederholt übertragenen Nachrichten einer bestimmten Schicht des OSI-Referenzmodells dargestellt. Dementsprechend ist die Einheit der y-Achse 27 nunmehr die Anzahl der Nachrichten pro Zeitintervall. Besonders gut zu erkennen ist die Bedeutung der weiteren Markierungen 34.1 und 34.2, da mit dem zweiten Schritt der Erhöhung der Dämpfung des Signals bei der weiteren Markierung 34.2 ein sprunghafter Anstieg der Anzahl der erneuten Übertragungen von Nachrichten der dargestellten Schicht des OSI-Referenzmodells verbunden ist.

In den zur Erläuterung gewählten Darstellungen des zweiten Bereichs ist als Basisskala der x-Achse 28 jeweils die Realzeit ausgewählt worden. Anstelle einer reinen Zeitachse kann jedoch ebenso die x-Achse 28 in Intervalle identischer Breite unterteilt werden, wobei für jedes Intervall eine bestimmte Anzahl übertragener Nachrichten steht. Damit lässt sich in dem Verlauf beispielsweise einfach ablesen, wie die gesamte Anzahl der übertragenen Nachrichten auf die einzelnen Schichten des OSI-Referenzmodells verteilt sind. Eine unnötige Spreizung der x-Achse 28 mit der Realzeit in den Zeiträumen, in denen insgesamt nur eine geringe Anzahl von Nachrichten übertragen wird, kann entfallen, wodurch eine besonders übersichtliche Darstellung erreicht wird. Die jeweilige Intervallebreite ist dabei bevorzugt durch einen Bediener beispielsweise mittels eines Auswahlmenüs einstellbar.

Anstelle der Realzeit als Basisskala für eine als Zeitachse ausgebildete x-Achse 28 kann auch eine Systemzeit verwendet werden, wie beispielsweise eine bestimmte Anzahl übertragener Rahmen (RFN; "Radio Frame Number") pro Intervall oder übertragener Chips pro Intervall.

Die Erfindung ist nicht auf die beschriebenen Ausführungsbeispiele beschränkt. Die Merkmale der Ausführungsbeispiele können auch beliebig miteinander kombiniert werden. Die Erfindung wird durch die folgenden Ansprüche beschränkt.

## Patentansprüche

1. Nachrichtenanalyseeinrichtung zum Analysieren von über Dienstzugangspunkte (8.1, 8.2, 8.3, 9.1, 9.2, 7.1, 7.2, 7.3) von Schichten (1, 2, 3, 4, 5) eines OSI-Referenzmodells übertragenen Nachrichten, wobei die Nachrichtenanalyseeinrichtung (10)
eine Speichervorrichtung (13) zum Speichern von Nachrichten,
eine Auswahlvorrichtung (14) zum Einlesen einer Abfolge von zeitlich aufeinanderfolgenden Nachrichten
und eine Darstellungseinrichtung (15) zum Darstellen von zumindest einem ersten Bereich (16) und einem zweiten Bereich (17) umfasst,
wobei in dem ersten Bereich (16) eine von der Auswahlvorrichtung (14) aus der Speichervorrichtung (13) eingelesene Abfolge von- Nachrichten aufgelistet darstellbar ist,
**dadurch gekennzeichnet,**
**dass** über eine Verbindungsstelle (11) die über die Dienstzugangspunkte (8.1, 8.2, 8.3, 9.1, 9.2, 7.1, 7.2, 7.3) übertragenen Nachrichten in der Speichervorrichtung (13) in einer Datei in chronologischer Reihenfolge ablegbar sind, und
**dass** die Auswahlvorrichtung (14) für zumindest einen Dienstzugangspunkt (7.1, 7.2, 7.3, 8.1, 8.2, 8.3, 9.1, 9.2) ein charakteristisches Merkmal der über diesen Dienstzugangspunkt (7.1, 7.2, 7.3, 8.1, 8.2, 8.3, 9.1, 9.2) übertragenen Nachrichten ermittelt und auf der Darstellungseinrichtung (15) der Verlauf (26) dieses charakteristischen Merkmals in dem zweiten Bereich (17) darstellbar ist.

2. Nachrichtenanalyseeinrichtung nach Anspruch 1,
**dadurch gekennzeichnet,**
**dass** die Auswahlvorrichtung (14) ein charakteristisches Merkmal für über mehrere Dienstzuganspunkte (7.1, 7.2, 7.3, 8.1, 8.2, 8.3, 9.1, 9.2) einer Schicht des OSI-Referenzmodells übertragene Nachrichten ermittelt und auf der Darstellungseinrichtung (15) der Verlauf (26) dieses charakteristischen Merkmals in dem zweiten Bereich (17) der Darstellungseinrichtung (15) darstellbar ist.

3. Nachrichtenanalyseeinrichtung nach Anspruch 1 oder 2,
**dadurch gekennzeichnet,**
**dass** die von der Auswahlvorrichtung (14) eingelesene Abfolge von Nachrichten abhängig von einer Auswahl ist, mit der in dem zweiten Bereich (17) ein bestimmter Punkt (32) des Verlaufs (26) des charakteristischen Merkmals auswählbar ist.

4. Nachrichtenanalyseeinrichtung nach Anspruch 3,
**dadurch gekennzeichnet,**
**dass** in dem in dem zweiten Bereich (17) dargestellten Verlauf (26) zumindest ein bestimmter Punkt durch eine Markierung (33.1, 33.2, 33.3, 33.4) markierbar ist und bei Auswahl der Markierung (33.1, 33.2, 33.3, 33.4), eine mit dem bestimmten Punkt korrespondierende Abfolge von Nachrichten aus der Speichervorrichtung (13) eingelesen wird.

5. Nachrichtenanalyseeinrichtung nach Anspruch 3 oder 4,
**dadurch gekennzeichnet,**
**dass** aufgrund von bei der Speicherung von Nachrichten in der Speichervorrichtung (13) abgelegten zusätzlichen Informationen durch die Auswahlvorrichtung (14) automatisch Markierungen (34.1, 34.2) erzeugbar sind.

6. Nachrichtenanalyseeinrichtung nach einem der Ansprüche 1 bis 5,
**dadurch gekennzeichnet,**
**dass** der Verlauf (26) des charakteristischen Merkmals in dem zweiten Bereich (17) in einem Koordinatensystem darstellbar ist, dessen X-Achse (28) eine Zeitachse ist.

7. Nachrichtenanalyseeinrichtung nach Anspruch 6,
**dadurch gekennzeichnet,**
**dass** der jeweils mit der in dem ersten Bereich (16) aktuell dargestellten Abfolge von Nachrichten korrespondierende Bereich des in dem zweiten Bereich dargestellten Verlaufs (26) hervorgehoben ist.

8. Nachrichtenanalyseeinrichtung nach einem der Ansprüche 1 bis 5,
**dadurch gekennzeichnet,**
**dass** der Verlauf des charakteristischen Merkmals in dem zweiten Bereich (17) in einem Koordinatensystem darstellbar ist, dessen X-Achse (28) in Intervalle mit identischer Anzahl von Nachrichten unterteilt ist.

9. Nachrichtenanalyseeinrichtung nach einem der Ansprüche 1 bis 8,
**dadurch gekennzeichnet,**
**dass** das charakteristische Merkmal eine Anzahl der übertragenen Nachrichten pro Zeitinervall und/oder eine Datenlast einer Schicht (1, 2, 3, 4, 5) des OSI-Referenzmodells und/oder eine Anzahl an wiederholt übertragenen Nachrichten ist.

10. Verfahren zur Analyse von Nachrichten, die über Dienstzugangspunkte (7.1, 7.2, 7.3, 8.1, 8.2, 8.3, 9.1, 9.2) von Schichten (1, 2, 3, 4, 5) eines OSI-Referenzmodells übertragen werden; mit folgenden Verfahrensschritten unter Verwendung eines Computers oder eines digitalen Signalprozessors:
- Einlesen einer Abfolge von Nachrichten durch eine Auswahlvorrichtung (14) und
- Darstellen der durch die Auswahlvorrichtung (14) eingelesenen Abfolge von Nachrichten in tabellarischer Form in einem ersten Bereich (16) einer Darstellungseinrichtung (15),
**dadurch gekennzeichnet,**
**dass** die von den über die Dienstzugangspunkte (8.1, 8.2, 8.3, 9.1, 9.2, 7.1, 7.2, 7.3) von Schichten übertragenen Nachrichten über eine Verbindung (11) in der Speichervorrichtung (13) als Datei in chronologischer Reihenfolge abgelegt werden, und
**dass** ein charakteristisches Merkmal von über zumindest einen Dienstzugangspunkt (7.1, 7.2, 7.3, 8.1, 8.2, 8.3, 9.1, 9.2) übertragenen Nachrichten durch die Auswahlvorrichtung (14) ermittelt wird,
und ein Verlauf des charakteristischen Merkmals in einem zweiten Bereich (17) einer Darstellungseinrichtung (15) dargestellt wird.

11. Verfahren nach Anspruch 10,
**dadurch gekennzeichnet,**
**dass** ein charakteristisches Merkmal von über mehrere Dienstzugangspunkte (7.1, 7.2, 7.3, 8.1, 8.2, 8.3, 9.1, 9.2) einer Schicht (1, 2, 3, 4, 5) eines OSI-Referenzmodells übertragenen Nachrichten durch die Auswahlvorrichtung (14) ermittelt wird.

12. Verfahren nach Anspruch 10 oder 11,
**dadurch gekennzeichnet,**
**dass** in dem zweiten Bereich (17) ein bestimmter Punkt (32) des Verlaufs (26) des charakteristischen Merkmals ausgewählt wird und
**dass** von der Auswahlvorrichtung (14) eine Abfolge von Nachrichten in Abhängigkeit von dem bestimmten Punkt (32) eingelesen wird.

13. Verfahren nach einem der Ansprüche 10 bis 12,
**dadurch gekennzeichnet,**
**dass** in dem zweiten Bereich (17) zumindest ein bestimmter Punkt des Verlaufs (26) des charakteristischen Merkmals durch zumindest eine Markierung (33.1, 33.2, 33.3, 33.4) markiert wird und
bei Auswahl der Markierung (33.1, 33.2, 33.3, 33.4) abhängig von dem mit der Markierung (33.1, 33.2, 33.3, 33.4) markierten bestimmten Punkt durch die Auswahlvorrichtung (14) eine korrespondierende Abfolge von Nachrichten aus der Speichervorrichtung (13) eingelesen wird.

14. Verfahren nach Anspruch 13,
**dadurch gekennzeichnet,**
**dass** bei der Speicherung der Nachrichten in der Speichervorrichtung (13) zusätzliche Informationen abgespeichert werden und
abhängig von diesen zusätzlichen Informationen durch die Auswahlvorrichtung (14) automatisch Markierungen (34.1, 34.2) in dem zweiten Bereich (17) erzeugt werden.

15. Verfahren nach einem der Ansprüche 10 bis 14,
**dadurch gekennzeichnet,**
**dass** das zumindest eine charakteristische Merkmal in dem zweiten Bereich (17) in einem Koordinatensystem dargestellt wird, dessen X-Achse (28) eine Zeitachse ist.

16. Verfahren nach Anspruch 15,
**dadurch gekennzeichnet,**
**dass** in dem zweiten Bereich (17) jeweils der mit der in dem ersten Bereich (16) tabellarisch dargestellten Abfolge von Nachrichten korrespondierende Bereich hervorgehoben dargestellt wird.

17. Verfahren nach einem der Ansprüche 10 bis 14,
**dadurch gekennzeichnet,**
**dass** das zumindest eine charakteristische Merkmal in dem zweiten Bereich (17) in einem Koordinatensystem dargestellt wird, dessen X-Achse (18) in Intervalle mit identischer Anzahl von Nachrichten unterteilt ist.

## Claims

1. Message analyser for analysing messages which are transmitted via service access points (8.1, 8.2, 8.3, 9.1, 9.2, 7.1, 7.2, 7.3) from layers (1, 2, 3, 4, 5) of an OSI reference model, the message analyser (10) comprising
a storage device (13) for storing messages,
a selector (14) for reading in a sequence of temporally successive messages
and a display device (15) for displaying at least one first region (16) and one second region (17),
a sequence of messages, which is read in by means of the selector (14) from the storage device (13), being able to be displayed listed in the first region (16),
**characterised in that**,
via a connection point (11), the messages which are transmitted via the service access points (8.1, 8.2, 8.3, 9.1, 9.2, 7.1, 7.2, 7.3) can be stored in the storage device (13) in a file in chronological sequence, and
the selector (14) determines, for at least one service access point (7.1, 7.2, 7.3, 8.1, 8.2, 8.3, 9.1, 9.2), a characteristic feature of the messages which are transmitted via this service access point (7.1, 7.2, 7.3, 8.1, 8.2, 8.3, 9.1, 9.2) and the course (26) of this characteristic feature can be displayed on the display device (15) in the second region (17).

2. Message analyser according to claim 1,
**characterised in that**
the selector (14) determines a characteristic feature for messages which are transmitted via a plurality of service access points (7.1, 7.2, 7.3, 8.1, 8.2, 8.3, 9.1, 9.2) of a layer of the OSI reference model, and the course (26) of this characteristic feature can be displayed on the display device (15) in the second region (17) of the display device (15).

3. Message analyser according to claim 1 or 2,
**characterised in that**
the sequence of messages which is read in by means of the selector (14) is dependent upon a selection with which a specific point (32) of the course (26) of the characteristic feature can be selected in the second region (17).

4. Message analyser according to claim 3,
**characterised in that**
at least one specific point can be marked by a marking (33.1, 33.2, 33.3, 33.4) in the course (26) displayed in the second region (17) and, upon selection of the marking (33.1, 33.2, 33.3, 33.4), a sequence of messages which corresponds to the specific point is read in from the storage device (13).

5. Message analyser according to claim 3 or 4,
**characterised in that**,
on the basis of the additional items of information stored during storage of messages in the storage device (13), markings (34.1, 34.2) can be produced automatically by means of the selector (14).

6. Message analyser according to one of the claims 1 to 5,
**characterised in that**
the course (26) of the characteristic feature can be displayed in the second region (17) in a coordinate system, the X axis (28) of which is a time axis.

7. Message analyser according to claim 6,
**characterised in that**
the region of the course (26) displayed in the second region, which corresponds respectively to the sequence of messages currently displayed in the first region (16), is highlighted.

8. Message analyser according to one of the claims 1 to 5,
**characterised in that**
the course of the characteristic feature can be displayed in the second region (17) in a coordinate system, the X axis (28) of which is subdivided into intervals with an identical number of messages.

9. Message analyser according to one of the claims 1 to 8,
**characterised in that**
the characteristic feature is a number of transmitted messages per interval of time and/or a data load of a layer (1, 2, 3, 4, 5) of the OSI reference model and/or a number of messages transmitted repeatedly.

10. Method for analysing messages which are transmitted via service access points (7.1, 7.2, 7.3, 8.1, 8.2, 8.3, 9.1, 9.2) from layers (1, 2, 3, 4, 5) of an OSI reference model; with the following method steps using a computer or a digital signal processor:
- reading in a sequence of messages by means of a selector (14) and
- display of the sequence of messages, which is read in by means of the selector (14), in tabular form in a first region (16) of a display device (15),
**characterised in that**
the messages which are transmitted via the service access points (8.1, 8.2, 8.3, 9.1, 9.2, 7.1, 7.2, 7.3) from layers are stored via a connection (11) in the storage device (13) in chronological sequence as a file, and
**in that** a characteristic feature of messages which are transmitted via at least one service access point (7.1, 7.2, 7.3, 8.1, 8.2, 8.3, 9.1, 9.2) is determined by means of the selector (14),
and a course of the characteristic feature is displayed in a second region (17) of a display device (15).

11. Method according to claim 10,
**characterised in that**
a characteristic feature of messages which are transmitted via a plurality of service access points (7.1, 7.2, 7.3, 8.1, 8.2, 8.3, 9.1, 9.2) of a layer (1, 2, 3, 4, 5) of an OSI reference model is determined by means of the selector (14).

12. Method according to claim 10 or 11,
**characterised in that**,
in the second region (17), a specific point (32) of the course (26) of the characteristic feature is selected and
**in that** a sequence of messages dependent upon the specific point (32) is read in by the selector (14).

13. Method according to one of the claims 10 to 12,
**characterised in that**,
in the second region (17), at least one specific point of the course (26) of the characteristic feature is marked by means of at least one marking (33.1, 33.2, 33.3, 33.4) and
upon selection of the marking (33.1, 33.2, 33.3, 33.4), dependent upon the specific point marked by the marking (33.1, 33.2, 33.3, 33.4), a corresponding sequence of messages is read in by means of the selector (14) from the storage device (13).

14. Method according to claim 13,
**characterised in that**,
during storage of the messages in the storage device (13), additional items of information are stored and
dependent upon these additional items of information, markings (34.1, 34.2) are produced automatically in the second region (17) by means of the selector (14).

15. Method according to one of the claims 10 to 14,
**characterised in that**
the at least one characteristic feature is displayed in the second region (17) in a coordinate system, the X axis (28) of which is a time axis.

16. Method according to claim 15,
**characterised in that**
the region which corresponds respectively to the sequence of messages displayed in tabular form in the first region (16) is displayed highlighted in the second region (17).

17. Method according to one of the claims 10 to 14,
**characterised in that**
the at least one characteristic feature is displayed in the second region (17) in a coordinate system, the X axis (18) of which is subdivided into intervals with an identical number of messages.

## Revendications

1. Dispositif d'analyse de messages pour analyser des messages transmis par le biais de points d'accès aux services (8.1, 8.2, 8.3, 9.1, 9.2, 7.1, 7.2, 7.3) de couches (1, 2, 3, 4, 5) d'un modèle de référence OSI, le dispositif d'analyse de messages (10) comprenant :
un dispositif de stockage (13) pour stocker des messages,
un dispositif de sélection (14) pour lire une suite de messages consécutifs dans le temps,
et un dispositif de représentation (15) pour représenter au moins une première zone (16) et une deuxième zone (17),
sachant qu'une suite de messages lue par le dispositif de sélection (14) dans le dispositif de stockage (13) peut être représentée dans la première zone (16),
**caractérisé, en ce que**, par le biais d'un point de branchement (11), les messages transmis par le biais des points d'accès aux services (8.1, 8.2, 8.3, 9.1, 9.2, 7.1, 7.2, 7.3) peuvent être déposés dans un fichier dans le dispositif de stockage (13) selon une séquence chronologique, et
**en ce que** le dispositif de sélection (14) pour au moins un point d'accès aux services (7.1, 7.2, 7.3, 8.1, 8.2, 8.3, 9.1, 9.2) détermine une caractéristique typique des messages transmis par le biais de ce point d'accès aux services (7.1, 7.2, 7.3, 8.1, 8.2, 8.3, 9.1, 9.2) et **en ce que** la courbe (26) de cette caractéristique typique peut être représentée dans la deuxième zone (17) sur le dispositif de représentation (15).

2. Dispositif d'analyse de messages selon la revendication 1, **caractérisé en ce que**, le dispositif de sélection (14) détermine une caractéristique typique pour des messages transmis par le biais de plusieurs points d'accès aux services (7.1, 7.2, 7.3, 8.1, 8.2, 8.3, 9.1, 9.2) d'une couche du modèle de référence OSI et **en ce que**, sur le dispositif de représentation (15), la courbe (26) de cette caractéristique typique peut être représentée dans la deuxième zone (17) du dispositif de représentation (15).

3. Dispositif d'analyse de messages selon la revendication 1 ou 2, **caractérisé en ce que** la suite de messages lue par le dispositif de sélection (14) dépend d'une sélection avec laquelle un point défini (32) sur la courbe (26) de la caractéristique typique peut être sélectionné dans la deuxième zone (17).

4. Dispositif d'analyse de messages selon la revendication 3, **caractérisé en ce que**, dans la courbe (26) représentée dans la deuxième zone (17) au moins un point défini peut être repéré par un repérage (33.1, 33.2, 33.3, 33.4) et, lors de la sélection du repérage (33.1, 33.2, 33.3, 33.4), une suite de messages correspondant au point défini est lue dans le dispositif de stockage (13).

5. Dispositif d'analyse de messages selon la revendication 3 ou 4, **caractérisé en ce que**, en raison d'informations supplémentaires déposées lors du stockage de messages dans le dispositif de stockage (13), des repérages (34.1, 34.2) peuvent être générés automatiquement par le dispositif de sélection (14).

6. Dispositif d'analyse de messages selon une des revendications 1 à 5, **caractérisé en ce que** la courbe (26) de la caractéristique typique peut être représentée dans la deuxième zone (17) dans un système de coordonnées dont l'axe des x (28) est un axe des temps.

7. Dispositif d'analyse de messages selon la revendication 6, **caractérisé en ce que** la zone, de la courbe (26) représentée dans la deuxième zone, correspondant à chaque fois à la suite de messages actuellement représentée dans la première zone (16) est mise en évidence.

8. Dispositif d'analyse de messages selon une des revendications 1 à 5, **caractérisé en ce que** la courbe de la caractéristique typique dans la deuxième zone (17) peut être représentée dans un système de coordonnées dont l'axe des x (28) est subdivisé en des intervalles ayant un nombre identique de messages.

9. Dispositif d'analyse de messages selon une des revendications 1 à 8, **caractérisé en ce que** la caractéristique typique est un nombre des messages transmis par intervalle de temps et/ou une charge de données d'une couche (1, 2, 3, 4, 5) du modèle de référence OSI et/ou un nombre de message transmis à plusieurs reprises.

10. Procédé pour analyser des messages qui sont transmis par le biais de points d'accès aux services (7.1, 7.2, 7.3, 8.1, 8.2, 8.3, 9.1, 9.2) de couches (1, 2, 3, 4, 5) d'un modèle de référence OSI ; avec les étapes de procédé suivantes en employant un ordinateur ou un processeur de traitement de signaux numériques :
- lire une suite de messages par le biais d'un dispositif de sélection (14) et
- représenter la suite de message lue par le biais du dispositif de sélection (14) sous une forme tabulaire dans une première zone (16) d'un dispositif de représentation (15),
**caractérisé en ce que** les messages transmis par le biais des points d'accès aux services (8.1, 8.2, 8.3, 9.1, 9.2, 7.1, 7.2, 7.3) des couches sont déposés en tant que fichiers selon une séquence chronologique par le biais d'un branchement (11) dans le dispositif de stockage (13), et
**en ce qu'**une caractéristique typique des messages transmis par le biais d'au moins un point d'accès aux services (7.1, 7.2, 7.3, 8.1, 8.2, 8.3, 9.1, 9.2) est déterminée par le dispositif de sélection (14),
et **en ce qu'**une courbe de la caractéristique typique est représentée dans une deuxième zone (17) d'un dispositif de représentation (15).

11. Procédé selon la revendication 10, **caractérisé en ce qu'**une caractéristique typique de messages transmis par le biais de plusieurs points d'accès aux services (7.1, 7.2, 7.3, 8.1, 8.2, 8.3, 9.1, 9.2) d'une couche (1, 2, 3, 4, 5) d'un modèle de référence OSI est déterminée par le dispositif de sélection (14).

12. Procédé selon la revendication 10 ou 11, **caractérisé en ce que**, dans la deuxième zone (17), un point défini (32) de la courbe (26) de la caractéristique typique est sélectionné et
**en ce qu'**une suite de messages est lue par le dispositif de sélection (14) en fonction du point défini (32).

13. Procédé selon une des revendications 10 à 12, **caractérisé**
**en ce que** dans la deuxième zone (17) au moins un certain point de la courbe (26) de la caractéristique typique est repéré par au moins un repérage (33.1, 33.2, 33.3, 33.4) et
**en ce que**, lors de la sélection du repérage (33.1, 33.2, 33.3, 33.4), une suite correspondante de messages est lue, en fonction du point défini repéré par le repérage (33.1, 33.2, 33.3, 33.4), par le dispositif de sélection (14) dans le dispositif de stockage (13).

14. Procédé selon la revendication 13, **caractérisé en ce que**, lors du stockage des messages, des informations supplémentaires sont stockées dans le dispositif de stockage (13) et
**en ce que**, en fonction de ces informations supplémentaires, des repérages (34.1, 34.2) sont générés automatiquement par le dispositif de sélection (14) dans la deuxième zone (17).

15. Procédé selon une des revendications 10 à 14, **caractérisé en ce que** la au moins une caractéristique typique dans la deuxième zone (17) est représentée dans un système de coordonnées dont l'axe des x (28) est un axe des temps.

16. Procédé selon la revendication 15, **caractérisé en ce que** dans la deuxième zone (17), la zone correspondante à la suite de messages représentée sous forme tabulaire dans la première zone (16) est à chaque fois mise en évidence.

17. Procédé selon une des revendications 10 à 14, **caractérisé en ce que** la au moins une caractéristique typique dans la deuxième zone (17) est représentée dans un système de coordonnées dont l'axe des x (18) est subdivisé en intervalles ayant un nombre identique de messages.
